# EUROPEAN PATENT APPLICATION

(11) **EP 3 819 841 A1**
(43) Date of publication of application: **12.05.2021**
(21) Application number: 19831505.3
(22) Date of filing: 12.04.2019
(51) Int. Cl.: G06Q 10/08, A47G 29/14, A47G 29/20, A47G 29/30, G07F 9/10

(54) **MULTIFUNCTION URBAN LOCKER**

(30) Priority: 04.07.2018 ES 201831050 U
(71) Applicant: Roselló Ciscar, José, 46760 Tavernes de la Valldigna (Valencia) (ES)
(72) Inventor: Roselló Ciscar, José, 46760 Tavernes de la Valldigna (Valencia) (ES)
(74) Representative: Ibarra Garcia, Isabel
(86) International application number: PCT/ES2019/070256
(87) International publication number: WO 2020/008087

(57) **Abstract**

The invention relates to a multifunction urban locker provided with two sections, with a telephone, a touchscreen, a bar code reader, and a plurality of different-sized compartments for containing parcels. The locker is protected with tamper-proof glass, electromechanical locks and, for greater security, a 360° video camera. The locker has spaces for advertising, in addition to batteries that can be recharged with solar energy and a pollen and CO₂ meter. Advantageously, the invention allows the telephony/parcel company to be contacted by means of telecommunication systems, and correspondence to be received at any hour of the day, regardless of the size of the package, securely and without needing to be at home.

## Description

### Object of the Invention

The present invention relates to a multifunction urban locker which offers a telephone terminal to make calls and additionally includes a plurality of compartments for holding and delivering parcels, all this being connected via a mobile phone with the parcel and telephony company servers.

This new device offers a parcel delivery and collection service to users who are registered in the digital collection system, and the locker additionally has means for collecting and transmitting environmental information about the surroundings where the locker is located, serving as a support for the inclusion of a mobile telephony antenna, a 360° video camera, and allowing the placement of advertising on its sides. Likewise, it will be equipped with USB type outlets for charging mobile telephones through this system or through wireless inductive charging.

### Background of the Invention

In view of the new technologies and the emergence of e-commerce, a commitment is made to a new distance selling model.

Among other measures, an extensive network of delivery and collection terminals is being created to support this objective, but this network is incomplete and not universal as it does not cover all possible scenarios such as, for example:
- Limitation to large residential apartment buildings.
- Space limitation in lobbies or the elevator area of the building. Due to the need of space saving, hallways of buildings are getting increasingly smaller and residents are reluctant to place terminals.
- Limitation due to the lack of or poor telephone signal coverage. There are cases where residents ask to place the terminals in basements or garages, with the subsequent coverage failures.
- The almost non-existent indirect advertising of the terminal itself given that only the residents see it.

In this sense, utility model ES1156183U belonging to the same applicant as the present invention, disclosed a mixed urban mailbox providing the service of holding and delivering parcels, as well as receiving letters. However, the invention disclosed in document ES1156183U lacked, among others, the functions of offering means for the user to make calls and of generating and sending information about the surroundings where the mentioned device is located.

Knowing the background described in detail above, a new multifunction urban locker concept which solves the aforementioned problems for the purpose of offering an improved and more complete device, has been developed.

### Description of the Invention

The proposed locker has been conceived for holding and delivering parcels, providing service 24 hours a day to any citizen. Likewise, the invention offers a terminal to make telephone calls and includes accessory elements offering information about the surroundings in which the mentioned locker is located.

The present invention includes means for anchoring to the ground, logically with the corresponding safety system so that it cannot be lifted or removed, with the particularity that said locker is able to have any geometric configuration, preferably the conventional parallelepiped configuration known for telephone booths.

In any case, the locker is made up of a body in which two parts or sections are defined, one in which there are located a terminal to make telephone calls, a digital touchscreen, a bar code reader, and mobile phone charging system, and another in which the compartments for containing parcels are located.

Therefore, both the digital touchscreen and the bar code reader will allow managing the opening and closing of the corresponding compartments which will contain the parcels.

In terms of the second section of the locker, it is intended for the parcels, said second section comprising several compartments located according to horizontal and/or vertical planes, even with different heights, such that the compartments will have different volumes to enable containing different-sized packages. In that sense, for example, the locker may comprise several compartments on one and the same level.

Each compartment is closed by means of a tamper-proof hinged door which is opened independently through an electromechanical lock that is activated through the suitable instruction.

On the upper portion thereof the corresponding compartment also has a tamper-proof hinged door, in the inner part of which there is located the electronics part of the locker, and thereafter an externally movable tray on corresponding guides to facilitate access to said electronics for maintenance and/or repair, the electronics being assisted by a battery, optionally a rechargeable battery, associated with a solar panel located in the upper outer portion of the body of the locker. In the event of a power outage, the locker has a mechanical door lock opening system which is operated by means of a handle. Therefore, all the doors will open at the same time when the handle is operated.

The locker includes a PLC circuit with software for connection to the company through a communication card, which is associated with a code reader that will allow every package to be identified and will communicate with the user through a touchscreen provided with tamper-proof glass.

Optionally, a mechanical lock is arranged in the door so that the operator can have access thereto, all the elements preferably being contained in the upper part where the entire terminal powering system is located.

Based on the described structure, limitation problems relating to spaces and coverage are solved, and advantageously, since the invention is placed on a public thoroughfare, it can be used for static advertising or even for digital advertising.

The multifunction urban locker will preferably be obtained in galvanized and lacquered steel, a material that is resistant to impacts or forcing attempts, as well as to adverse weather conditions.

### Description of the Drawings

To complement the description that will be made and for the purpose of helping to better understand the features of the invention according to a preferred practical embodiment thereof, a set of drawings is attached as an integral part of said description in which the following is depicted in an illustrative and non-limiting character:
Figure 1 shows a general perspective view of the locker according to the object of the present invention, in which the different compartments for the receipt and delivery of parcels are observed.
Figure 2 shows a perspective view contrary to that of the preceding figure.

### Preferred Embodiment of the Invention

In view of the described figures, the proposed multifunction urban locker configured according to the embodiment shown can be seen, said locker having a structured body, preferably a parallelepiped body (2) with the same appearance as that of a conventional telephone booth.

The body of the locker (1) includes two different sections, wherein one of the sections has a telephone (2), a digital touchscreen (3), and a programmable bar code reader (4) .

Meanwhile, the other different section of the body of the locker is formed by a plurality of compartments (5) of different volumes, even including several compartments at one and the same height, located preferably in horizontal planes, to enable storing different-sized packages.

Each compartment (5) is equipped with an individual tamper-proof hinged door with a computer-controlled electromechanical lock/control circuit to provide access to the suitable inner compartments.

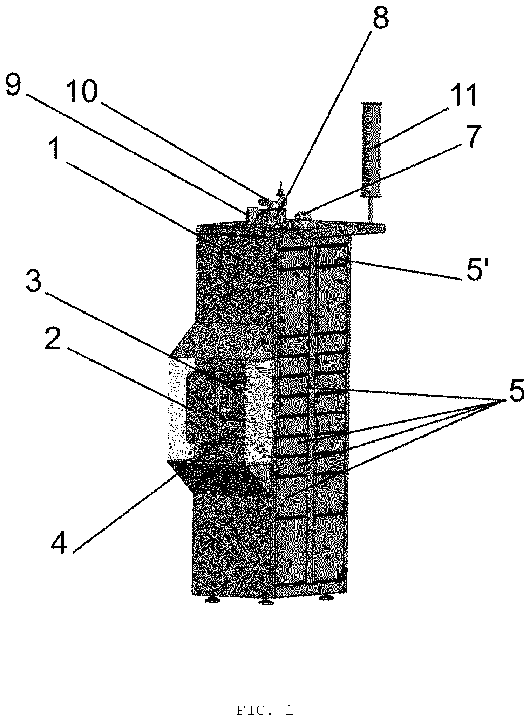

Additionally, as can be seen in Figure 1, the body of the locker (1) has a compartment, preferably in its upper part, with the suitable tamper-proof hinged door (5') and lock, inside which there are established the control electronics of the locker, the emergency mechanical door opening system, as well as a supply battery (not depicted in the figures).

The internal electronics are therefore associated with the digital touchscreen (3) and the bar code reader (4) to enable communication with the telephony and/or parcel company through which the electromechanical opening of each of the compartments is managed.

In addition to the compartments (5) for parcel collection and delivery, there is an upper compartment with the suitable door (5') where the corresponding control electronics of the locker are stored, having a battery for powering same, said batter being able to be recharged by means of a solar panel located on the upper base of the body of the locker.

The locker will have a computer, preferably a microprocessor, for controlling its electrical and electromechanical elements and for opening the compartments. Both the computer and the supply battery are preferably located in the upper compartment with a suitable door (5').

The locker of the invention has an emergency mechanical door opening system which can be operated in the event of a power outage to open the doors of all the compartments at the same time.

Through the bar code reader (4) and the digital touchscreen (3), the package to be sent or collected can be identified, the request of which will have been previously electronically managed such that, in said electronic processing, the user will receive a bar code in his or her mobile terminal so that he or she can show it to the code reader, and once read by the device of the invention, this will allow the opening of the corresponding compartment and the removal or delivery of the package.

Packages can thereby be sent and received, even respecting the iconic image of current telephone booths.

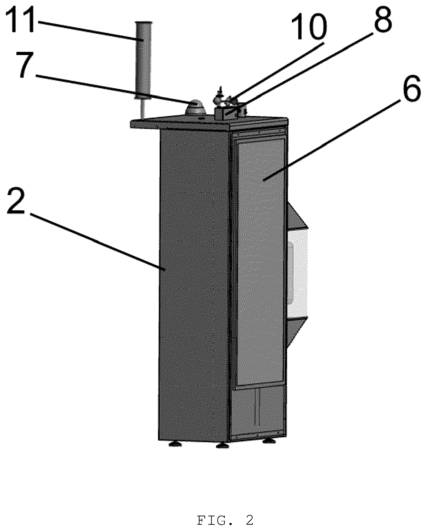

Figure 2 depicts the external side of the multifunction urban locker which is provided with transparent tamper-proof glass (6). This glass completely or partially covers the outer surface of the body of the device, such that a protected area for the placement of advertising is generated. Advertising can therefore be presented using physical means, such as posters, or the body of the locker itself can be provided with a digital screen covered by the transparent tamper-proof glass (6) to offer advertising by means of digital media.

In fact, using digital media for presenting advertising enables the changes that are to be applied in the offered advertisement to be controlled remotely and in a centralized manner.

Additionally, the locker includes a camera for a 360-degree recording of the viewing angle (7) and a wireless mobile phone charging system, and furthermore the locker preferably includes in its upper part a real time pollen presence analyzer (8), a carbon dioxide meter (9), and a weather station (10).

Finally, in order to offer a support for housing a mobile telephony antenna which is installed inside the device (11) depicted in Figures 1 and 2.

## Claims

1. A multifunction urban locker, **characterized in that** it is made up of a body comprising two different sections, one in which there are arranged a telephone, a digital touchscreen, a bar code reader, and a second section comprising a plurality of compartments of different volumes, located in horizontal and/or vertical planes, for packages of different sizes, each compartment being equipped with a tamper-proof hinged door with a computer-controlled electromechanical lock; and wherein the body of the locker has an upper compartment with the suitable tamper-proof hinged door and lock, inside which there are established the control electronics of the locker, the emergency mechanical door opening system, as well as a supply battery, wherein the electronics are associated with the digital touchscreen and the bar code reader for communication with the parcel and/or telephony company through which the electromechanical opening of each of the compartments is managed.

2. The multifunction urban locker according to claim 1, **characterized in that** the supply battery can be recharged by means of a solar panel provided for this purpose in the upper outer part of the body of the locker.

3. The multifunction urban locker according to claim 1, **characterized in that** the control electronics are arranged on a tray that can be extracted from the corresponding housing.

4. The multifunction urban locker according to claim 1, **characterized in that** the computer controlling the opening of the compartments and the supply battery are located in the upper inner part of the body of the locker.

5. The multifunction urban locker according to claim 1, **characterized in that** the external side of the body of the locker is provided with transparent tamper-proof glass, completely or partially covering the outer surface of the body, for the placement of advertising.

6. The multifunction urban locker according to claim 1, **characterized in that** the external side of the body of the locker is provided with a transparent tamper-proof glass-covered digital screen, completely or partially covering the outer surface of the body, for showing advertising.

7. The multifunction urban locker according to claim 1, **characterized in that** it includes a camera for a 360-degree recording of the viewing angle.

8. The multifunction urban locker according to claim 1, **characterized in that** it includes a wireless charger for mobile phones.

9. The multifunction urban locker according to claim 1, **characterized in that** it preferably includes in its upper part a real time pollen presence analyzer, a carbon dioxide meter, and a weather station.

10. The multifunction urban locker according to claim 1, **characterized in that** it includes a mobile telephony antenna.

11. The multifunction urban locker according to claim 1, **characterized in that** it includes in the lower portion thereof elements for anchoring to the pavement, hidden from the outside.
